# EUROPÄISCHE PATENTANMELDUNG

(11) **EP 4 786 084 A1**
(43) Veröffentlichungstag der Anmeldung: **05.08.2026**
(21) Anmeldenummer: 25215958.7
(22) Anmeldetag: 14.11.2025
(51) Int. Cl.: B23F 5/02, B23F 21/00, B23F 21/02

(54) **VERFAHREN ZUR VERZAHNBEARBEITUNG MINDESTENS EINES WERKSTÜCKS**

(30) Priorität: 29.01.2025 DE 102025103190
(71) Anmelder: Liebherr-Verzahntechnik GmbH, 87437 Kempten (DE)
(72) Erfinder: GEISER, Hansjoerg, 87437 Kempten (DE); HAUN, Steffen, 87437 Kempten (DE)
(74) Vertreter: Lorenz Seidler Gossel Part. mbB

(57) **Zusammenfassung**

Die vorliegende Erfindung zeigt ein Verfahren zur Verzahnbearbeitung, insbesondere zur Hartfeinbearbeitung, eines oder mehrerer Werkstücke (30) mittels eines verzahnten Feinbearbeitungswerkzeuges (20) mit unbestimmter Schneide, welches eine tonnenförmige Grundform aufweist, wobei das Feinbearbeitungswerkzeug (20) und das Werkstück (30) wälzgekoppelt miteinander rotieren, während das Feinbearbeitungswerkzeug (20) in mindestens einem Verzahn-Schnitt in einer Vorschub-Richtung parallel zur Rotationsachse des Werkstücks verfahren wird, um das Werkstück (30) über die Werkstückbreite zu bearbeiten. Dabei ist vorgesehen, dass zwischen der Bearbeitung zweier Werkstücke und/oder zwei Verzahn-Schnitten an einem Werkstück und/oder während eines Verzahn-Schnitts die Berührlinie zwischen Feinbearbeitungswerkzeug und Werkstück auf dem Feinbearbeitungswerkzeug gezielt verlagert wird, um einen anderen Bereich der Werkzeugoberfläche zum Einsatz zu bringen, indem der Neigungswinkel zwischen dem Feinbearbeitungswerkzeug (20) und dem Werkstück (30) verändert wird.

## Beschreibung

Die vorliegende Erfindung betrifft ein Verfahren zur Verzahnbearbeitung, insbesondere zur Hartfeinbearbeitung, mindestens eines Werkstücks mittels eines Feinbearbeitungswerkzeuges mit unbestimmter Schneide, welches eine tonnenförmige Grundform aufweist, sowie eine entsprechende Verzahnmaschine. Insbesondere kann es sich bei dem Werkstück um ein innenverzahntes Werkstück handeln.

Für die Hartfeinbearbeitung von Innenverzahnungen gibt es unterschiedliche kontinuierlich wälzende Fertigungsverfahren. Hierbei handelt es sich insbesondere um:
- Honen mit Korund-Werkzeugen
- Wälzschleifen mit Korund-Schleifschnecken
- Honen mit abrichtfreien CBN-Werkzeugen
- Wälzschleifen mit abrichtfreien CBN-Schleifschnecken
- Hartschälen mit Wälzschälrädern (geometrisch bestimme Schneide)

Die Herausforderung ist, mit einem Werkzeug möglichst viele Werkstücke fertigen zu können. Hierbei ist die Qualität innerhalb der geforderten Grenzen zu halten.

Die Verfahren mit Korund-Werkzeugen (Wälzschleifen, Honen) erlauben durch das Abrichten ein Nachschärfen des Werkzeugs, wodurch die Werkstückqualität nach einem Fertigungszyklus bis zur Verschleißgrenze wieder in die gewünschte Qualität gebracht werden kann. Allerdings ist das Abrichten zeitaufwendig.

Bei dem Verfahren Hartschälen ergeben sich aufgrund der wenigen Schneidkanten entsprechende Vorschubmarkierungen in den Flanken, welche sich hinsichtlich Tragfähigkeit- oder Geräuschverhalten negativ auswirken können.

Mit einem CBN belegten Werkzeug kann man wie mit Korund-Werkzeugen radial in die Verzahnung fahren (ähnlich der Kinematik beim Honen) oder axial durch die Verzahnung fahren (Wälzschleifen). Der Zeitaufwand des Abrichtens entfällt. Allerdings entstehen höhere Werkzeugkosten.

Aus dem Wälzschleifen außenverzahnter Werkzeuge ist es bekannt, zwischen zwei Verzahn-Schnitten und/oder während eines Verzahn-Schnitts das Werkzeug in Richtung seiner Drehachse zu verfahren, um einen anderen Bereich der Werkzeugoberfläche zum Einsatz zu bringen. Hierdurch kann die Oberfläche des Werkzeugs besser ausgenutzt werden. Dies wird auch als Vershiften bzw. Shiftstrategie bezeichnet. Für die Verzahnbearbeitung von Innenverzahnungen mittels eines mit CBN gelegten Feinbearbeitungswerkzeugs, welches eine tonnenförmige Grundform aufweist, gibt es bisher jedoch keine vergleichbare Lösung. Insbesondere kann hier das Werkzeug aufgrund seiner Tonnenform nicht in Richtung seiner Drehachse verfahren werden.

Druckschrift US 8,382,560 B2 offenbart ein solches Feinbearbeitungswerkzeug, welches eine tonnenförmige Grundform aufweist und zum kontinuierlichen Wälzschleifen eingesetzt wird.

Diverse Druckschriften zeigen bereits Zahnradbearbeitungsverfahren eines Zahnrades mit Innenverzahnung durch ein Feinbearbeitungswerkzeug, welches eine tonnenförmige Grundform aufweist, wobei das Feinbearbeitungswerkzeug und das Werkstück wälzgekoppelt miteinander rotieren, während das Feinbearbeitungswerkzeug in mindestens einem Verzahn-Schnitt in einer Vorschub-Richtung parallel zur Rotationsachse des Werkstücks durch das Werkstück hindurch bewegt wird, um das Werkstück über die Werkstückbreite zu bearbeiten.

Hierbei wird jeweils mit einem festen Berührpfad zwischen Feinbearbeitungswerkzeug und Werkstück und einem durch die Geometrie des Feinbearbeitungswerkzeugs und des Werkstücks vorgegebenen Achskreuzwinkel und einem Neigungswinkel von Null zwischen Werkstück und Feinbearbeitungswerkzeug gearbeitet.

So wird in Druckschrift EP 2 383 064 B1 der Achskreuzwinkel in Abhängigkeit von der Größe der Balligkeit des Feinbearbeitungswerkzeugs auf einen festen Wert eingestellt. In Druckschrift EP 2 460 625 B1 wird der Achskreuzwinkel jeweils nach dem Abrichten an den neuen Durchmesser des Werkzeugs angepasst. Druckschrift EP 2 471 621 B1 sieht vor, den Achskreuzwinkel in Abhängigkeit von den Schrägungswinkeln der Verzahnungen von Werkstück und Werkzeug einzustellen. Hierbei soll in Abhängigkeit von gemessenen Profilfehlern am Werkstück eine Korrektur von Fehlern in der tatsächlichen Position des Werkzeugs vorgenommen werden.

Druckschrift EP 3 274 120 B1 zeigt ein Verfahren zur Verzahnbearbeitung von innenverzahnten Werkstücken, bei welchem ein Kombi-Werkzeug zum Einsatz kommt, welches ein Werkzeug zum Hartschälen und ein Werkzeug zum Honen aufweist, die nacheinander zur Verzahnbearbeitung zum Einsatz kommen.

Unabhängig davon, ob mit abrichtbaren Werkzeugen wie z.B. Korund-Werkzeugen oder abrichtfreien Werkzeugen wie CBN-Werkzeugen gearbeitet wird, ist der Verschleiß des Werkzeugs ein entscheidender Faktor für die Wirtschaftlichkeit des Verfahrens.

Aufgabe der vorliegenden Erfindung ist es daher, ein verbessertes Verfahren zur Verzahnbearbeitung mindestens eines Werkstücks mittels eines Feinbearbeitungswerkzeuges, welches eine tonnenförmige Grundform aufweist, zur Verfügung zu stellen.

Diese Aufgabe wird durch eine Verfahren gemäß Anspruch 1 gelöst. Bevorzugte Ausgestaltungen der vorliegenden Erfindung sind Gegenstand der Unteransprüche.

Im Folgenden verwenden wir zur Beschreibung der vorliegenden Erfindung etablierte Bezeichnungen aus dem Wälzschälen, wie sie beispielsweise in EP 2 520 390 B2 beschrieben sind. Insbesondere verwenden wir die Begriffe "Achskreuzwinkel", "effektiver Achskreuzwinkel", "Gemeinlot" und "Neigungswinkel" in der für das Wälzschälen üblichen Bedeutung, wie sie dort beschrieben ist.

Die vorliegende Erfindung umfasst ein Verfahren zur Verzahnbearbeitung eines oder mehrerer Werkstücke mittels eines verzahnten Feinbearbeitungswerkzeuges mit unbestimmter Schneide, welches eine tonnenförmige Grundform aufweist, wobei das Feinbearbeitungswerkzeug und das Werkstück wälzgekoppelt miteinander rotieren, während das Feinbearbeitungswerkzeug in mindestens einem Verzahn-Schnitt im Eingriff mit dem Werkstück in einer Vorschub-Richtung parallel zur Rotationsachse des Werkstücks entlang der Werkstückbreite verfahren wird, um das Werkstück über die Werkstückbreite zu bearbeiten. Hierbei ist vorgesehen, dass zwischen der Bearbeitung zweier Werkstücke und/oder zwischen zwei Verzahn-Schnitten an einem Werkstück und/oder während eines Verzahn-Schnitts der Berührpfad zwischen Feinbearbeitungswerkzeug und Werkstück auf dem Feinbearbeitungswerkzeug gezielt verlagert wird, um einen anderen Bereich der Werkzeugoberfläche zum Einsatz zu bringen, indem der Neigungswinkel zwischen dem Feinbearbeitungswerkzeug und dem Werkstück verändert wird.

Der Erfinder der vorliegenden Erfindung hat erkannt, dass es durch das Verändern des Neigungswinkels möglich ist, bei einem tonnenförmigen Feinbearbeitungswerkzeug mit unbestimmter Schneide den Berührpfad zwischen Feinbearbeitungswerkzeug und Werkstück auf dem Feinbearbeitungswerkzeug zu verlagern, ohne dass dies zu Änderungen in der Geometrie des mit dem Feinbearbeitungswerkzeug bearbeiteten Werkstücks führt. Hierdurch ist es möglich, einen anderen Bereich der Werkzeugoberfläche zur Feinbearbeitung zu verwenden und so die Werkzeugoberfläche besser auszunutzen. Insbesondere kann hierbei der Berührpfad durch die Veränderung des Neigungswinkels in einen anderen Bereich der Werkzeugoberfläche verlagert werden, in welchem die Werkzeugoberfläche noch nicht oder weniger verschlissen ist als in dem Bereich, in welchem der Berührpfad vor der Verlagerung verlief.

Der Berührpfad ist hierbei jener Pfad auf dem Werkzeug, der die Endgeometrie, welche nach dem jeweiligen Schnitt vorliegt, erzeugt.

Insbesondere sind hierdurch Shift-Strategien, wie sei bei der Verzahnbearbeitung von Außenverzahnungen bzw. mit zylindrischen Werkzeugen durch ein Vershiften des Werkzeugs in Richtung der Werkzeugachse eingesetzt werden, nunmehr auch bei der Verzahnbearbeitung von Innenverzahnungen bzw. mit tonnenförmigen Werkzeugen möglich, indem der Neigungswinkel entsprechend geändert wird.

Gemäß einer möglichen Ausgestaltung der vorliegenden Erfindung kann es sich bei dem Werkstück um ein innenverzahntes Werkstück handeln. Die vorliegende Erfindung ist jedoch auch einsetzbar, wenn es sich bei dem Werkstück um ein außenverzahntes Werkstück handelt.

Das erfindungsgemäße Verfahren zur Verzahnbearbeitung kann insbesondere zur Hartfeinbearbeitung des Werkstücks dienen.

Gemäß einer möglichen Ausgestaltung der vorliegenden Erfindung kann im Rahmen der vorliegenden Erfindung mit der Kinematik einer Wälzschälbearbeitung gearbeitet werden. Es handelt sich daher bevorzugt um ein Wälzschäl-Verfahren mit unbestimmter Schneide.

Gemäß einer möglichen Ausgestaltung der vorliegenden Erfindung erfolgt die Relativbewegung von Werkstück und Feinbearbeitungswerkzeug daher mit der Kinematik einer Wälzschälbearbeitung.

Gemäß einer möglichen Ausgestaltung der vorliegenden Erfindung handelt es sich bei dem Feinbearbeitungswerkzeug um ein Wälzschäl-Werkzeug mit unbestimmter Schneide. Insbesondere wird hierbei ein Feinbearbeitungswerkzeug eingesetzt, wie es im folgenden noch näher beschrieben wird.

Gemäß einer möglichen Ausgestaltung der vorliegenden Erfindung kann es sich erfindungsgemäß um ein Bearbeitungsverfahren mit theoretischem Punktkontakt handeln.

Die im Rahmen des erfindungsgemäßen Verfahrens genutzten Achskreuzwinkel können beispielsweise in einem Bereich zwischen 0 Grad und ± Schrägungswinkel des Werkstücks und/oder in einem Bereich zwischen 0 Grad und ± 30 ° liegen, bevorzugt in einem Bereich zwischen 0 Grad und ± 25°.

Der Schrägungswinkel des Werkzeugs kann beispielsweise in einem Bereich zwischen 0 Grad und ± Schrägungswinkel des Werkstücks und/oder in einem Bereich zwischen 0 Grad und ± 30 ° liegen, bevorzugt in einem Bereich zwischen 0 Grad und ± 25°.

Gemäß einer möglichen Ausgestaltung der vorliegenden Erfindung kann es sich bei dem Feinbearbeitungswerkzeug um ein nicht-abrichtbares Werkzeug, insbesondere ein bevorzugt galvanisch beschichtetes CBN-Werkzeug, handeln, oder der Berührpfad zwischen Feinbearbeitungswerkzeug und Werkstück auf dem Feinbearbeitungswerkzeug wird verlagert, ohne das Feinbearbeitungswerkzeug zwischenzeitlich abzurichten. In beiden Fällen wird der Neigungswinkel daher nicht verändert, um diesen an die Geometrie des Werkzeugs anzupassen, sondern um die zur Verfügung stehende, entweder nicht-abrichtbare oder durch das Abrichten zur Verfügung gestellte, Oberfläche des Werkzeugs besser auszunutzen.

Gemäß einer möglichen Ausgestaltung der vorliegenden Erfindung wird der Berührpfad zwischen Feinbearbeitungswerkzeug und Werkstück auf dem Feinbearbeitungswerkzeug nach einer vorgegebenen Anzahl von Verzahn-Schnitten und/oder einer vorgegebenen Shift-Strategie verlagert.

Gemäß einer möglichen Ausgestaltung der vorliegenden Erfindung erfolgt die Veränderung des Neigungswinkels ohne eine oder unabhängig von einer Vermessung einer tatsächlich gefertigten Geometrie des Werkstücks. Es soll daher nicht der Neigungswinkel korrigiert werden, um Profilfehler zu beheben, sondern der Neigungswinkel wird verändert, um den Berührpfad an eine andere Position zu verschieben und damit die Werkzeugoberfläche besser auszunutzen.

Gemäß einer möglichen Ausgestaltung der vorliegenden Erfindung wird nach der Verlagerung des Berührpfads die gleiche Geometrie des Werkstücks erzeugt wie vor der Verlagerung des Berührpfads. Die Verlagerung des Berührpfads wird daher nicht zur Korrektur von Fehlern in der Geometrie des Werkstücks eingesetzt, sondern um die Werkzeugoberfläche besser auszunutzen.

Gemäß einer möglichen Ausgestaltung der vorliegenden Erfindung werden zusammen mit der Veränderung des Neigungswinkels eine oder mehrere weitere Bewegungsachsen der Verzahnmaschine so verfahren, dass trotz der Verlagerung des Berührpfads die gleiche Geometrie auf dem Werkstück erzeugt wird wie vor der Verlagerung des Berührpfads.

Insbesondere werden hierbei die eine oder mehreren weiteren Bewegungsachsen der Verzahnmaschine in Abhängigkeit von der Größe der Änderung des Neigungswinkels verfahren.

Bevorzugt wird hierbei bei einer Veränderung des Neigungswinkels der Achskreuzwinkel und/oder der Achsabstand nachgeführt.

Gemäß einer möglichen Ausgestaltung der vorliegenden Erfindung wird der Berührpfad zwischen Feinbearbeitungswerkzeug und Werkstück auf dem Feinbearbeitungswerkzeug gezielt verlagert, um einen anderen Bereich der Werkzeugoberfläche zum Einsatz zu bringen, indem die relative Lage zwischen dem Feinbearbeitungswerkzeug und dem Werkstück durch Änderung von Achsabstand, Neigungswinkel und Achskreuzwinkel verändert wird. Insbesondere wird hierbei der Neigungswinkel gezielt verändert und der Achsabstand und der Achskreuzwinkel an den neuen Neigungswinkel angepasst.

Gemäß einer möglichen Ausgestaltung der vorliegenden Erfindung wird der Berührpfad mehrmals durch eine Veränderung des Neigungswinkels in einen anderen Bereich der Werkzeugoberfläche verlagert, wobei die Verlagerung bevorzugt jeweils so erfolgt, dass die Werkzeugoberfläche in dem anderen Bereich noch nicht oder weniger verschlissen ist als in dem Bereich, in welchem der Berührpfad vor der Verlagerung verlief. Zwischen der Veränderung des Neigungswinkels wird hierbei jeweils eine Verzahnbearbeitung durchgeführt, durch welche die Werkzeugoberfläche im Bereich des Berührpfads einem Verschleiß ausgesetzt ist.

Gemäß einer möglichen Ausgestaltung der vorliegenden Erfindung wird der Berührpfad in einem oder mehreren Schritten um insgesamt mindestens 10 % der Werkzeugbreite verlagert, bevorzugt um insgesamt mindestens 20 % der Werkzeugbreite.

Gemäß einer möglichen Ausgestaltung der vorliegenden Erfindung wird der Neigungswinkel in einem oder mehreren Schritten um insgesamt mindestens 1 Grad verändert, bevorzugt um insgesamt mindestens 2 Grad und weiter bevorzugt um mindestens 4 Grad.

Gemäß einer möglichen Ausgestaltung der vorliegenden Erfindung erfolgt der Materialabtrag auf dem Werkstück in einem Bearbeitungs-Schnitt innerhalb eines Kontaktbereiches mit dem Feinbearbeitungswerkzeug, welcher auf dem Feinbearbeitungswerkzeug eine Erstreckung in Vorschub-Richtung aufweist, wobei der Berührpfad durch das in Vorschub-Richtung hinten liegende Ende des Kontaktbereiches gebildet wird. Der Berührpfad definiert daher die sich durch den Feinbearbeitungsprozess ergebende Geometrie auf dem Werkstück, der Materialabtrag erfolgt dagegen in einen gegenüber dem Berührpfad vergrößertem Kontaktbereich.

Gemäß einer möglichen Ausgestaltung der vorliegenden Erfindung werden die Tonnenform des Feinbearbeitungswerkzeugs und/oder die Form der Zähne und die Zustellung zum Werkstück so gewählt, dass die Breite eines Kontaktbereichs zwischen dem Werkstück und dem Feinbearbeitungswerkzeug, in welchem in einem Bearbeitungs-Schnitt ein Materialabtrag auf dem Werkstück erfolgt, mindestens 10 % der Werkzeugbreite beträgt, bevorzugt mindestens 20 % der Werkzeugbreite.

Gemäß einer möglichen Ausgestaltung der vorliegenden Erfindung erfolgt, wenn als nächster Bearbeitungs-Schnitt ein Schlicht-Schnitt durchgeführt wird, die Verlagerung des Berührpfads in Richtung der Vorschub-Richtung, um einen bisher noch nicht zur Feinbearbeitung eingesetzten Bereich der Werkzeugoberfläche zum Einsatz zu bringen.

Gemäß einer möglichen Ausgestaltung der vorliegenden Erfindung ist das Feinbearbeitungswerkzeug auf einem Werkzeugdorn aufgespannt, welcher einseitig in einer Werkzeugaufnahme aufgenommen ist.

Bevorzugt erfolgt hierbei die Vorschub-Bewegung des Bearbeitungs-Schnitts ziehend. Hierdurch werden Kollisionen des Feinbearbeitungswerkzeugs bzw. des Werkzeugdorns mit dem Werkstück vermieden.

Gemäß einer möglichen Ausgestaltung der vorliegenden Erfindung weist das Feinbearbeitungswerkzeug zwei Breiten-Bereiche mit unterschiedlichem Schleifmaterial, insbesondere mit unterschiedlicher Beschichtung, auf. Insbesondere weist der erste Breiten-Bereich eine erste Körnung und der zweite Breiten-Bereich eine zweite Körnung auf, wobei sich die Körnungen voneinander unterscheiden und insbesondere die eine Körnung gröber ist als die andere Körnung.

Die beiden Bereiche können hierdurch zum Beispiel für unterschiedliche Bearbeitungsschritte eingesetzt werden, beispielsweise eine Grobbearbeitung (Schruppen) und eine Feinbearbeitung (Schlichten). Weiterhin kann die Aufteilung des Werkzeuges der Tatsache Rechnung tragen, dass der Materialabtrag über eine ausgedehnte Kontaktfläche erfolgt, in welcher daher bevorzugt zumindest zum Teil gröberes Schleifmaterial eingesetzt wird, während die erzeugte Geometrie allein durch die Kontaktlinie bestimmt wird, welche daher bevorzugt in einem Breiten-Bereich mit feinerem Schleifmaterial verläuft.

Gemäß einer möglichen Ausgestaltung der vorliegenden Erfindung wird durch Verkippen des Feinbearbeitungswerkzeuges zwischen einer Schrupp- und einer Schlicht-Bearbeitung ein erster Breiten-Bereich zum Schruppen und ein zweiter Breiten-Bereich zum Schlichten eingesetzt.

Gemäß einer möglichen Ausgestaltung der vorliegenden Erfindung wird der Kontaktbereich bei der Feinbearbeitung so gewählt wird, dass ein in Vorschub-Richtung vorderer Teil des Kontaktbereiches in einem ersten Breiten-Bereich mit einer ersten Körnung und der Berührpfad in einem zweiten Breiten-Bereich mit einer zweiten Körnung liegt, wobei die erste Körnung gröber ist als die zweite Körnung.

Gemäß einer möglichen Ausgestaltung der vorliegenden Erfindung ist ein Punkt des Feinbearbeitungswerkzeuges mit dem größten Radius gegenüber der Mitte der Werkzeugbreite versetzt angeordnet und teilt das Werkzeug in einen ersten und einen zweiten Bereich mit ausgehend von diesem Punkt kleiner werdenden Radius auf, welche eine unterschiedliche Breite aufweisen. Dies erlaubt es, die Neigungswinkel in einem im Hinblick auf Kollisionen günstigen Bereich zu halten.

Bevorzugt beträgt der Unterschied in der Breite der beiden Bereiche mindestens 5 % des betragsmäßig kleineren Werts, weiter bevorzugt mindestens 10%.

Alternativ oder zusätzlich kann der erste, in Vorschubrichtung vorne angeordnete und/oder dem Werkzeughalter abgewandte Bereich eine größere Breite aufweisen als der zweite, in Vorschubrichtung hinten angeordnete und/oder dem Werkzeughalter zugewandte Bereich.

Gemäß einer möglichen Ausgestaltung der vorliegenden Erfindung wird beim Bearbeiten eines Werkstücks mit einem ersten Kontaktbereich, welcher benachbart zu einem in Vorschubrichtung vorne liegenden und/oder dem Werkzeughalter abgewandten Ende des Feinbearbeitungswerkzeugs liegt, mit einem betragsmäßig größeren Neigungswinkel gearbeitet als beim Bearbeiten eine Werkstücks mit einem zweiten Kontaktbereich, welcher benachbart zu einem in Vorschubrichtung hinten liegenden und/oder dem Werkzeughalter zugewandten Ende des Feinbearbeitungswerkzeugs liegt.

Dies trägt in der ersten Variante der Tatsache Rechnung, dass der Berührpfad auf der in Vorschubrichtung hinten liegenden Seite des Kontaktbereiches angeordnet ist und daher bei einem ersten Kontaktbereich, welcher benachbart zu einem in Vorschubrichtung vorne liegenden Ende des Feinbearbeitungswerkzeugs liegt, um die Breite des Kontaktbereichs von dem in Vorschubrichtung vorne liegenden Ende des Feinbearbeitungswerkzeugs beabstandet ist, so dass hier mit einem kleineren Neigungswinkel gearbeitet werden kann. Bei dem zweiten Kontaktbereich, welcher benachbart zu einem in Vorschubrichtung hinten liegenden Ende des Feinbearbeitungswerkzeugs liegt, liegt der Berührpfad dagegen unmittelbar neben dem hinten liegenden Ende des Feinbearbeitungswerkzeugs, so dass ein größerer Neigungswinkel benötigt wird. Diese Betrachtung bzw. Vorgehensweise gilt insbesondere dann, wenn die Tonnenform des Feinbearbeitungswerkzeugs symmetrisch bezüglich einer Mittelebene des Feinbearbeitungswerkzeugs ist. In der zweiten Variante tragen die unterschiedlichen Neigungswinkel an den beiden Enden des Werkzeugs der Tatsache Rechnung, dass auf der dem Werkzeughalter zugewandten Seite, d.h. jener Seite, mit welcher das Werkzeug im Werkzeughalter der Verzahnmaschine eingespannt ist, durch den Werkzeugdorn eine Störkontur besteht, welche einer Bearbeitung mit einem großen Neigungswinkel entgegen stehen kann. Bevorzugt wird hierbei eine nicht-symmetrische Tonnenform gewählt, um die unterschiedlichen Neigungswinkel zu ermöglichen.

Bevorzugt liegt der Unterschied zwischen den Neigungswinkeln mindestens 5 % des betragsmäßig kleineren Werts, weiter bevorzugt mindestens 10 %.

Gemäß einer möglichen Ausgestaltung der vorliegenden Erfindung wird eine Verzahnbearbeitung, bei welcher das Feinbearbeitungswerkzeug wie oben beschrieben in mindestens einem Verzahn-Schnitt in einer Vorschub-Richtung parallel zur Rotationsachse des Werkstücks durch das Werkstück hindurch bewegt wird, für eine Schrupp-Bearbeitung eingesetzt, während die Schlichtbearbeitung durch Honen erfolgt. Das oben beschriebene Verfahren würde dann nur zum Schruppen eingesetzt.

Das Schlichten kann dagegen durch eine Honbearbeitung erfolgen. Diese kann nach einem bekannten Vorgehen durchgeführt werden. Insbesondere wird hierbei das Honwerkzeug radial in das Werkstück eingeführt. In Achsrichtung des Werkstücks und/oder Werkzeugs kann hierbei eine oszillierende Bewegung durchgeführt werden.

Gemäß einer möglichen Ausgestaltung der vorliegenden Erfindung werden die erste Verzahnbearbeitung und das Honen mit der gleichen Aufspannung des Werkstücks und/oder des Feinbearbeitungswerkzeugs durchgeführt.

Gemäß einer möglichen Ausgestaltung der vorliegenden Erfindung wird ein erster Bereich und/oder Teil des Feinbearbeitungswerkzeugs für die erste Verzahnbearbeitung und ein zweiter Bereich und/oder Teil des Feinbearbeitungswerkzeugs für das Honen eingesetzt.

Gemäß einer möglichen Ausgestaltung der vorliegenden Erfindung ist die Breitenballigkeit des zum Honen eingesetzten zweiten Bereichs und/oder Teils kleiner als die Breitenballigkeit des ersten Bereichs und/oder Teils.

Gemäß einer möglichen Ausgestaltung der vorliegenden Erfindung werden eine Mehrzahl von identischen Werkstücken verzahnbearbeitet und/oder eine Mehrzahl von Werkstücken wird durch die Verzahnbearbeitung mit einer identischen Geometrie versehen.

Gemäß einer möglichen Ausgestaltung der vorliegenden Erfindung wird hierbei der Berührpfad mehrfach verlagert.

Die vorliegende Erfindung umfasst weiterhin ein Feinbearbeitungswerkzeug für ein Verfahren, wie es oben beschrieben wurde, d.h. ein verzahntes Werkzeug mit einer tonnenförmigen Grundform und mit unbestimmter Schneide, welches für ein erfindungsgemäßes Verfahren ausgelegt ist.

Im Rahmen der vorliegenden Erfindung bedeutet die tonnenförmige Grundform hierbei insbesondere, dass der Radius des durch das Feinbearbeitungswerkzeug definierten Grundkörpers ausgehend von einem Punkt mit dem größten Radius in Richtung der Rotationsachse des Feinbearbeitungswerkzeugs und damit in Werkzeugbreitenrichtung zu beiden Seiten hin abnimmt. Bevorzugt nimmt der Radius hierbei stetig ab. Insbesondere kann das Werkzeug hierbei breitenballig ausgeführt sein.

Das Feinbearbeitungswerkzeug weist eine Verzahnung auf, wobei sich die Zähne in Breitenrichtung auf der Umfangsoberfläche des Feinbearbeitungswerkzeugs erstrecken. Die Verzahnung kann hierbei eine Gradverzahnung oder eine Schrägverzahnung sein.

Gemäß einer möglichen Ausgestaltung der vorliegenden Erfindung weist das Feinbearbeitungswerkzeug einen ersten und einen zweiten Breiten-Bereich, Bereich und/oder Teil mit einem unterschiedlichen Schleifmaterial und/oder einer unterschiedlichen Breite und/oder einer unterschiedlichen Breitenballigkeit auf. Insbesondere ist das Feinbearbeitungswerkzeug und/oder sind die Bereiche hierbei so ausgestaltet, wie dies oben im Hinblick auf das Verfahren bereits beschrieben wurde.

Gemäß einer möglichen Ausgestaltung der vorliegenden Erfindung ist das Feinbearbeitungswerkzeug hierbei als ein Wälzschälwerkzeug mit unbestimmter Schneide ausgelegt.

Gemäß einer möglichen Ausgestaltung der vorliegenden Erfindung weist das Profil des Werkzeuges für jeden Zahn in jeder Breitenposition in einer Schnittebene durch einen Punkt am Außendurchmesser die Form einer Schneide eines Wälzschälwerkzeugs auf. Insbesondere ist das Profil hierbei so ausgelegt, dass das das Profil definierende Wälzschälwerkzeug auf den entsprechenden Außendurchmesser ausgelegt und unter dem gewählten effektiven Achskreuzwinkel positioniert sowie um einen Neigungswinkel δ gekippt einsetzbar ist, welcher gerade der Ableitung des Außendurchmesserverlaufs an der entsprechenden Breitenposition entspricht.

Die Schnittebene, in welcher das Profil definiert ist, entspricht hierbei der durch die Schneide des das Profil definierenden Wälzschälwerkzeugs aufgespannten Ebene bzw. Spanfläche. Ihre Ausrichtung hängt daher von dem für das entsprechende Wälzschälwerkzeug gewählten Span- und Treppenwinkel ab.

Der Span- und Treppenwinkel können hierbei nach unterschiedlichen Strategien ausgelegt werden.

In einer möglichen Ausgestaltung wird ein Treppenwinkel gewählt, welcher im Bereich von +/-3° um den Schrägungswinkel des Werkzeugs auf der entsprechenden Werkzeugbreite liegt und/oder ein Spanwinkel, welcher in einem Bereich von +/-3° um den Neigungswinkel auf der entsprechenden Werkzeugbreite liegt, sodass das Profil auf dem Feinbearbeitungswerkzeug im wesentlichen im Normalschnitt der Verzahnung desselben definiert ist.

Es sind jedoch auch andere Treppenwinkel und/oder Spanwinkel denkbar.

In einer möglichen Ausgestaltung wird ein Treppenwinkel von 0° und ein Spanwinkel von 0° gewählt, sodass das Profil auf dem Feinbearbeitungswerkzeug in einem Stirnschnitt definiert ist.

Auf dem Feinbearbeitungswerkzeug ist jedoch keine definierte Schneide vorhanden; vielmehr wird die Oberflächengeometrie durch die Aneinanderreihung solcher theoretischen Schneiden in Werkzeugbreitenrichtung als eine zusammenhängende Oberfläche mit unbestimmter Schneide definiert. Diese Oberfläche wird auf dem Werkzeug durch die Einhüllende der Körner auf der Oberfläche des Werkzeuges gebildet.

Die vorliegende Erfindung umfasst weiterhin eine Verzahnmaschine mit einer um eine erste Rotationsachse drehbar angetriebenen Werkstückaufnahme und einer um eine zweite Rotationsachse drehbar angetriebenen Werkzeugaufnahme, wobei die Werkzeugaufnahme und die Werkstückaufnahme relativ zueinander über Bewegungsachsen der Verzahnmaschine bewegbar sind, und mit einer Steuerung, welche programmiert ist, die Bewegungsachsen der Verzahnmaschine so anzusteuern, dass die Verzahnmaschine ein erfindungsgemäßes Verfahren, wie es oben beschrieben wurde, durchführt. Bevorzugt führt die Verzahnmaschine das Verfahren hierbei automatisch durch.

Weiterhin umfasst die vorliegende Erfindung ein Computerprogramm auf, welches Befehle umfasst, welche, wenn Sie auf der Steuerung einer Verzahnmaschine, wie sie oben beschrieben wurde, ablaufen, die Bewegungsachsen der Verzahnmaschine so ansteuern, dass die Verzahnmaschine ein erfindungsgemäßes Verfahren, wie es oben beschrieben wurde, durchführt.

Die Steuerung weist insbesondere einen Mikrokontroller und einen nicht-flüchtigen Speicher auf, auf welchem das Computerprogramm abgespeichert ist, wobei die Befehle des Computerprogramms auf dem Mikrokontroller abgearbeitet werden. Die Steuerung steht mit den Antrieben der Bewegungsachsen der Verzahnmaschine in Verbindung und steuert diese an.

Bei den Antrieben der Verzahnmaschine handelt es sich bevorzugt um NC-Antriebe.

Die vorliegende Erfindung wird nun anhand von Ausführungsbeispielen und Zeichnungen näher beschrieben.

Dabei zeigen:
- Fig. 1A:: eine Prinzipdarstellung eines erfindungsgemäßen Verfahrens und einer erfindungsgemäßen Verzahnmaschine,
- Fig. 1B:: eine perspektivische Darstellung eines Ausführungsbeispiels einer erfindungsgemäßen Verzahnmaschine,
- Fig. 2:: das Arbeiten mit einem ersten und einem zweiten Berührpfad im Rahmen eines Ausführungsbeispiels eines erfindungsgemäßen Verfahrens,
- Fig. 3: eine Prinzipdarstellung von zwei erfindungsgemäßen Feinbearbeitungswerkzeugen, auf welchem jeweils ein zu dem Berührpfad gehörender Kontaktbereich eingezeichnet ist,
- Fig. 4: eine Prinzipdarstellung eines erfindungsgemäßen Feinbearbeitungswerkzeugs mit einem ersten und zweiten Breiten-Bereich mit unterschiedlichem Schleifmaterial, und
- Fig. 5: eine Prinzipdarstellung eines erfindungsgemäßen Feinbearbeitungswerkzeugs mit einer symmetrischen Tonnenform und eines erfindungsgemäßen Feinbearbeitungswerkzeugs mit einer asymmetrischen Tonnenform und damit zwei Bereichen mit unterschiedlicher Breite,
- Fig. 6A und 6B: den Verlauf der Schneiden der theoretischen Wälzschälwerkzeuge, über welche die Oberflächengeometrie des Feinbearbeitungswerkzeugs in zwei Ausführungsbeispielen für unterschiedliche Werkzeugbreitenpositionen definiert wird, wobei in Fig. 6A der Treppen- und der Spanwinkel Null sind und in Fig. 6B der Treppenwinkel dem Schrägungswinkel entspricht, und
- Fig. 7: den Verlauf der Schneiden der theoretischen Wälzschälwerkzeuge, über welche die Oberflächengeometrie des Feinbearbeitungswerkzeugs definiert wird, mit einem an den Neigungswinkel angepassten Spanwinkel der theoretischen Schneiden.

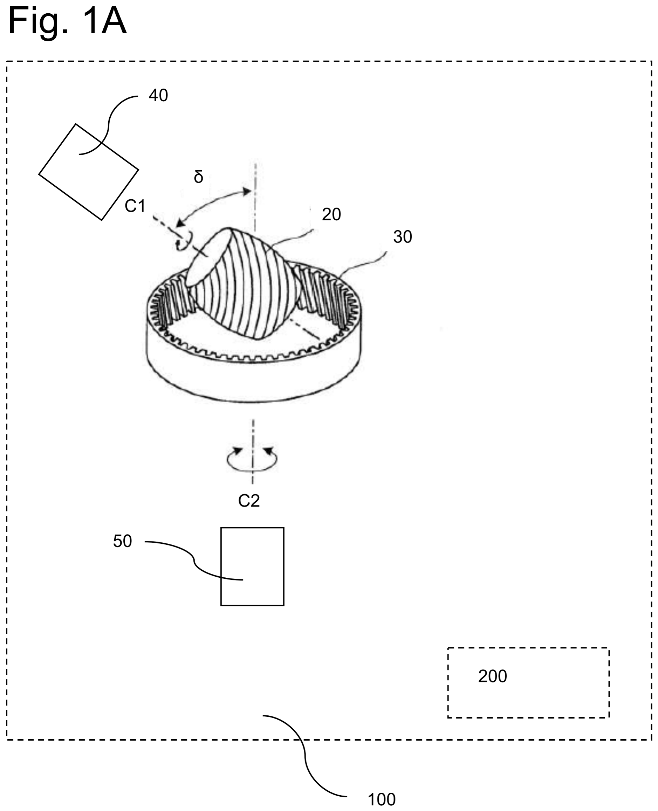

Fig. 1A zeigt eine erfindungsgemäße Verzahnmaschine 100 in einer Prinzipdarstellung.

Die Verzahnmaschine 100 weist eine um eine erste Rotationsachse C2 drehbar angetriebene Werkstückaufnahme 50 und eine um eine zweite Rotationsachse C1 drehbar angetriebene Werkzeugaufnahme 40 auf. Die Werkzeugaufnahme 40 kann insbesondere als ein Werkzeughalter ausgeführt sein, in welchem das Werkzeug einseitig eingespannt ist. Die Werkzeugaufnahme 40 und die Werkstückaufnahme 50 sind relativ zueinander über Bewegungsachsen der Verzahnmaschine bewegbar. Die Achsanordnung entspricht hierbei bevorzugt einer Wälzschälmaschine und/oder einer Hon-Maschine.

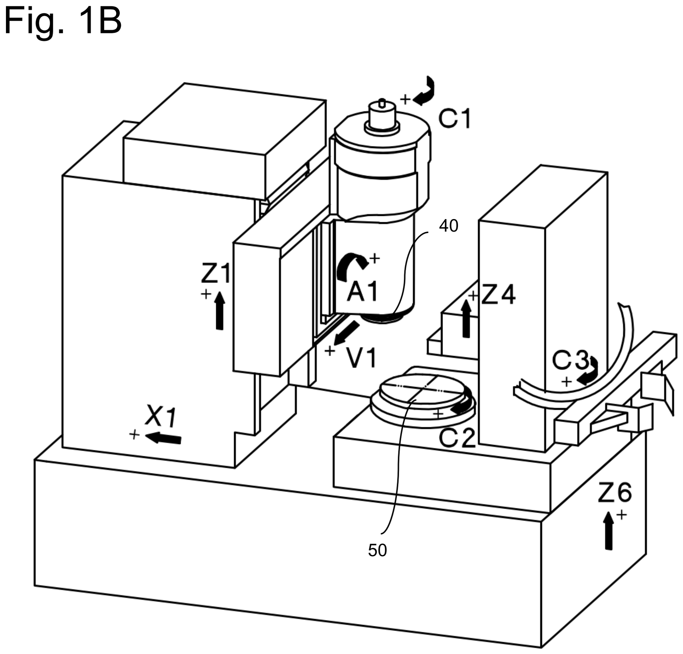

Fig. 1B zeigt ein Ausführungsbeispiel einer Verzahnmaschine und der auf der Verzahnmaschine verfügbaren Bewegungsachsen.

Insbesondere ist hierbei eine Bewegungsachse Z1 vorgesehen, mit welcher die Werkzeugaufnahme 40 so relativ zur Werkstückaufnahme 50 bewegbar ist, dass das Werkzeug 20 in Richtung der Drehachse C2 der Werkstückaufnahme durch das Werkstück hindurch verfahren werden kann. Die Bewegungsachse Z1 verläuft hierzu bevorzugt parallel zur Drehachse C2. Weiterhin kann eine Bewegungsachse X1 vorgesehen sein, über welche die Zustellung des Werkzeugs 20 in das Werkstück 30 erfolgt. Die Bewegungsachse X1 steht bevorzugt senkrecht auf der Drehachse C2. Die Bewegungsachse V1 kann eine Bewegung in einer Ebene senkrecht zur X1-Achse erlauben und/oder in Richtung senkrecht zu der Drehachse C1. Bei den Bewegungsachsen X1, V1 und Z1 handelt es sich bevorzugt um Linearachsen.

Weiterhin ist eine Schwenkachse A1 vorgesehen, welche parallel zur X1-Achse und senkrecht zur C1-Achse verläuft und über welche die Werkzeugaufnahme 40 gedreht werden kann.

Je nach Ausgestaltung kann die A1-Achse hierbei einen Bearbeitungskopf drehen, welcher die V1-Achse und die Werkzeugaufnahme 40 umfasst, oder die A1-Achse kann auf einem Schlitten angeordnet sein, welcher über die V1-Achse verfahrbar ist und lediglich die Werkzeugaufnahme 40 drehen. In letzterem Fall steht die V1-Achse senkrecht auf der Z1-Achse, in ersterem Fall kann die V1-Achse über die A1-Achse in einer Ebene, welche senkrecht auf der X1-Achse steht, gedreht werden und steht bevorzugt senkrecht auf der C1-Achse, d.h. sie kann die C1-Achse parallelverschieben.

Über die A1-Achse kann im Zusammenspiel mit der X1-Achse und der V1-Achse der Neigungswinkel und der Achskreuzwinkel zwischen den Achsen C2 und C1 eingestellt werden kann.

Wird das Werkzeug so seitlich neben dem bzw. innerhalb des Werkstücks positioniert, dass die Rotationsachsen C2 und C1 von Werkstück und Werkzeug in einer Ebene liegen, welche senkrecht auf der A1-Achse steht, kann durch Verschwenken der A1-Achse der Neigungswinkel eingestellt werden.

Befindet sich das Werkzeug dagegen so vor bzw. in dem Werkstück, so dass das Gemeinlot der Rotationsachsen C2 und C1 von Werkstück und Werkzeug parallel zur A1-Achse verläuft, wird durch ein Verschwenken der A1-Achse der Achskreuzwinkel verändert.

In einer Zwischenposition wir durch die Veränderung der A1-Achse sowohl der Achskreuzwinkel als auch der Neigungswinkel verändert. Die konstruktive Ausgestaltung der Bewegungsachsen ist hierbei jedoch nicht auf die oben beschriebene Ausgestaltung eingeschränkt. Die vorliegende Erfindung ist auch mit anderen Ausgestaltungen der Bewegungsachsen durchführbar.

Weiterhin ist eine Steuerung 200 vorgesehen, welche programmiert ist, ein erfindungsgemäßes Verfahren durchzuführen. Die Bewegungsachsen weisen bevorzugt NC-Antriebe auf, welche durch die Steuerung angesteuert werden.

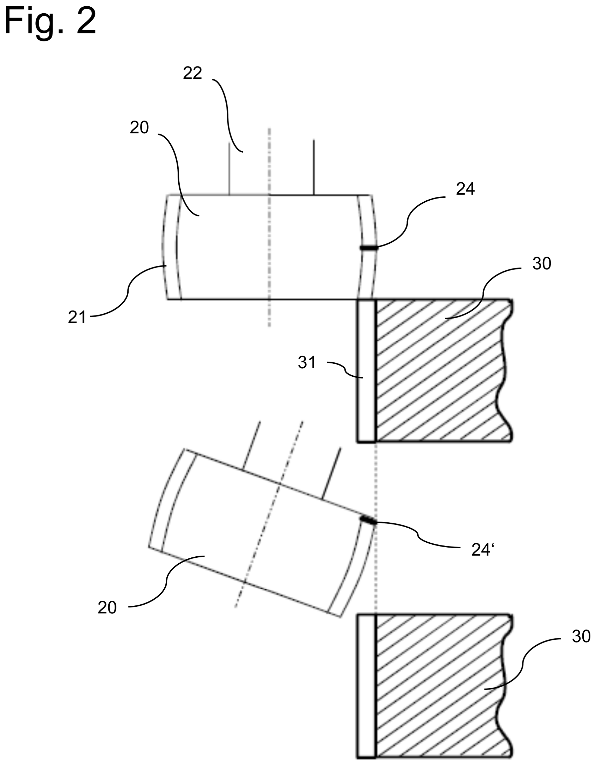

Die in Fig. 2 gezeigte Idee des erfindungsgemäßen Verfahrens besteht nun darin, das Werkzeug (20) so auszuführen, dass der Berührpfad (24, 24') zwischen Werkzeug (1) und Werkstück (2) verlagert werden kann. Dies wird wie in Fig. 2 dargestellt durch eine Änderung des Neigungswinkels des tonnenförmigen bzw. breitenballigen Werkzeugs (20) mit geometrisch unbestimmter Schneide realisiert.

Da üblicherweise außermittig bearbeitet wird, sind in der Praxis hierfür mehre Achsen in Kombination in Einsatz. Weiterhin werden der Achsabstand und der Achskreuzwinkel nachgeführt.

Insbesondere wird hierbei die A1-Achse eingesetzt, um das Werkzeug 20 zu verschwenken, während die Stellung der weiteren Achsen Y1, X1, C1, Z1, C2 so angepasst wird, dass das Werkzeug weiterhin mit dem Werkstück in Eingriff ist, sich der gewünschte Neigungs- und Achskreuzwinkel ergibt und mit dem neuen Berührpfad die gleiche Geometrie auf dem Werkstück erzeugt wird wie mit dem alten Berührpfad.

Durch das Verlagern des Berührpfads (24) zu (24') kann nach dem Erreichen des Standweg-Endes des ersten Berührpfads (24) ein neuer, bisher unbenutzter Berührpfad (24') mit den Werkstücken in Eingriff gebracht werden.

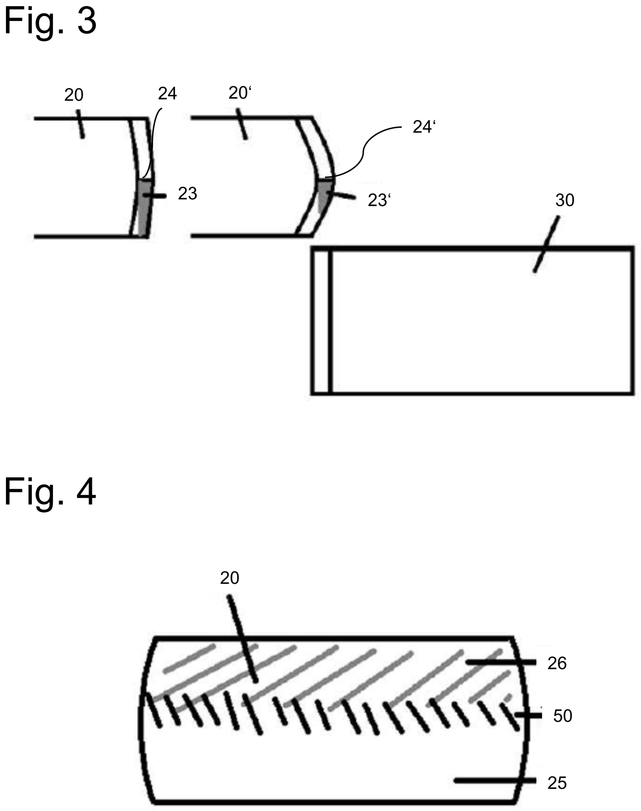

Die bereits benutzte Berührpfad (24) verschiebt sich in die qualitativ nicht entscheidende Kontaktfläche (23, 23') des Materialabtrags, welche in Fig. 3 dargestellt ist. Der Vorgang des in Eingriff-Bringens bisher unbenutzter Berührpfade (23') kann mehrfach wiederholt werden, bis der obere Rand des Werkzeugs (20, 20') erreicht wird.

Fig. 2 zeigt hierbei die Verlagerung des Berührpfads (24) vom Hochpunkt der Balligkeit bis zur letzten möglichen Verlagerungs-Position des Berührpfads (24') am oberen Rand des Werkzeuges. Auf dem Weg von Berührpfad (24) zu Berührpfad (24') werden bevorzugt weitere Shift-Positionen des Berührpfads verwendet.

Der Bearbeitungsprozess entspricht hierbei kinematisch bevorzugt dem Wälzschälen, erfolgt aber mit einem Feinbearbeitungswerkzeug mit unbestimmter Schneide. Es handelt sich daher bevorzugt um ein Wälzschälen mit unbestimmter Schneide. Insbesondere wird daher mit einem beispielsweise gegenüber einem Wälzschleifen deutlich geringeren Achskreuzwinkel gearbeitet.

Zur Bestimmung der erforderlichen Geometrie des Werkzeugs wird gemäß einer möglichen Ausgestaltung der vorliegenden Erfindung zunächst ein maximaler Außendurchmesser am Werkzeug festgelegt, sowie ein Achskreuzwinkel, unter dem das Werkzeug arbeiten soll. Hierbei bezeichnet der Achskreuzwinkel den Winkel der gekreuzten Rotationsachsen von Werkstück und Werkzeug bei Projektion entlang deren Gemeinlots, welcher auch dem effektiven Achskreuzwinkel beim Bearbeiten der Verzahnung mit der Berührspur am Werkzeug auf Höhe des maximalen Außendurchmessers entspricht.

Aus dieser Achsanordnung ergibt sich über einen Zylinderschnitt des Werkstückfußkreiszylinders mit einer Ebene, welche gegeben ist durch die Rotationsachse des Werkzeugs und den Gemeinlotvektor als aufspannende Vektoren, eine Ellipse, deren kurze Halbachse dem gewählten maximalen Außendurchmesser am Werkzeug entspricht. Durch diese Ellipse ist eine Begrenzung des Außendurchmessers am Werkzeug über dessen Breite, d.h. die Position in Richtung der Rotationsachse des Werkzeugs, gegeben, welche vom Maximaldurchmesser ausgehend in beide Richtungen streng monoton fallend mit monotoner Ableitung unterschritten werden muss, um Luft für ein Vershiften zu erreichen - praktisch umsetzbar beispielsweise durch eine Parabel als Modifikation auf den Zylinderschnitt.

Anschließend kann für jede Breitenposition auf dem Werkzeug eine Schneide eines Schälwerkzeugs ausgelegt werden (etwa mit öffentlich verfügbarer Software wie SkiveAll), derart, dass das Wälzschälwerkzeug auf den entsprechenden Außendurchmesser ausgelegt und unter dem gewählten effektiven Achskreuzwinkel positioniert sowie um einen Neigungswinkel δ gekippt wird, welcher gerade der Ableitung des Außendurchmesserverlaufs auf der entsprechenden Höhe entspricht, sodass der Zahnkopf des Werkzeugs tangential im Fuß des zu fertigenden Werkstücks liegen kann.

Diese Schneiden werden dann so zu einem Werkzeug aneinandergefügt, dass der Schrägungswinkel an dem Durchmesser des Werkzeugs, welcher einen beliebigen aber fixen Durchmesser des Werkstücks fertigt, auf jeder Breitenposition des Werkzeugs der Differenz aus effektivem Achskreuzwinkel und Schrägungswinkel des Werkstücks entspricht.

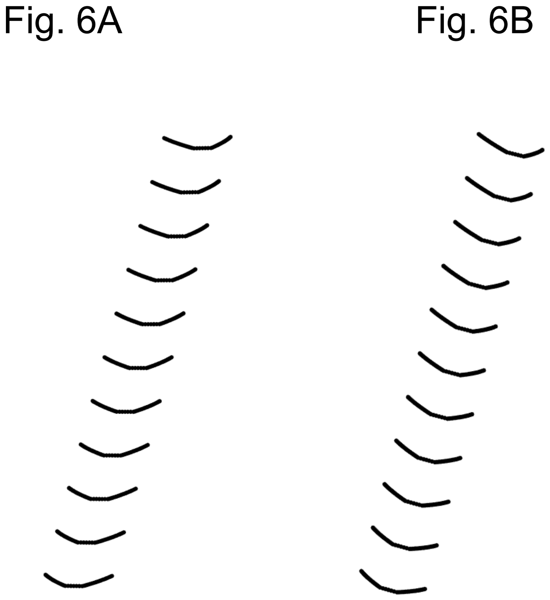

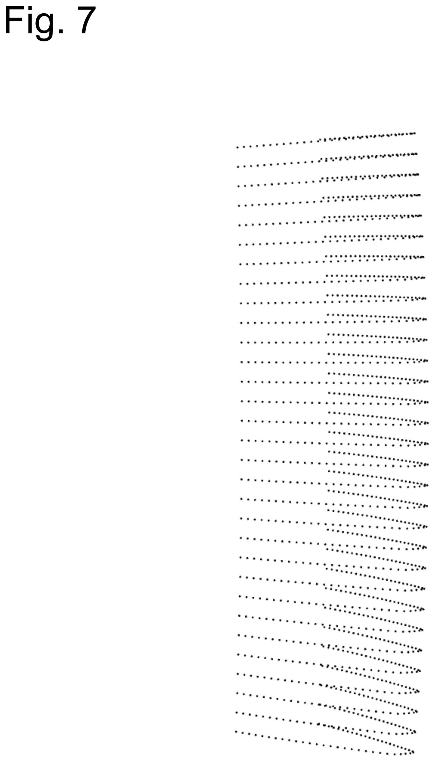

Fig. 6 und 7 zeigen die zur Definition des Werkzeugs gewählten Schneiden für einen Zahn des Werkzeugs in Abhängigkeit von ihrer Position in Werkzeugbreite, welche hier von oben nach verläuft.

Hierbei wird für jede Position in Werkzeugbreite für den dort gemäß der gewählten Außendurchmesserverlauf vorliegenden maximalen Außendurchmesser ein theoretisches Wälzschälwerkzeug mit eben diesem Außendurchmesser definiert, dessen Schneide dann die Oberfläche des Werkzeugs an dieser Breitenposition definiert.

Die Ausrichtung der Schneiden, über welche die Geometrie des Werkzeugs definiert wird, kann hierbei in gleicher Weise gewählt werden, wie dies bei einem normalen Wälzschälwerkzeug mit definierter Schneide durch die Wahl des Treppenwinkels und des Spanwinkels erfolgt.

Bei einem Treppen- und Spanwinkel von Null wird die Geometrie des Werkzeugs für alle Zähne in einer Ebene definiert, welche senkrecht auf der Rotationsachse des Werkzeugs steht, wie dies in Fig. 6A für einen Zahn der Verzahnung gezeigt ist.

Bei einem Treppen- und/oder Spanwinkel ungleich Null wird die Geometrie des Werkzeugs dagegen für jeden Zahn in einer diesem Zahn an der entsprechenden Werkzeugbreite zugeordneten Ebene definiert. Hierbei kann die Ebene, in welcher sich die Schneidkante des theoretischen Wälzschälwerkzeugs befindet und in welcher damit das Profil des Zahns definiert wird, für jeden Zahn um eine Achse, welche von dem Zahnkopf zur Rotationsachse des Werkzeugs verläuft, gedreht sein, was einem Treppenwinkel der Schneidkante entspricht, und gleichzeitig kann diese Achse bezüglich einer Ebene, welche senkrecht auf der Rotationsachse steht, geneigt sein, was einem Spanwinkel der Schneidkante entspricht.

Insbesondere ist es bei Wälzschälwerkzeugen üblich, einen Treppenwinkel zu wählen, welcher im Wesentlichen dem Steigungswinkel des Werkzeugs entspricht, sodass die Schneidkante in einer Ebene verläuft, welche senkrecht zur Erstreckung des Zahnes verläuft und damit normal auf der Oberfläche der Zahnflanken steht, wie dies in Fig. 6B gezeigt ist.

Den Treppenwinkel kann man hierbei über die Werkzeugbreite konstant halten. Den Spanwinkel, welcher bezüglich der Rotationsachse des Werkzeugs und damit unabhängig von der Anstellung zum Werkstück definiert ist, kann dagegen mit dem Neigungswinkel nachgeführt werden, wie dies in Fig. 7 gezeigt ist, um so unabhängig vom Neigungswinkel die gleichen Eingriffsverhältnisse am Werkstück entlang der Ebene zu haben, in welcher das Profil definiert wird.

Untersuchungen haben jedoch ergeben, dass die aus der erfindungsgemäßen Definition resultierende Oberflächengeometrie des Werkzeugs weitgehend unabhängig von den Ebenen ist, in welchem das Profil definiert wird, und damit weitgehend unabhängig von Treppen- und Spanwinkel.

Der streng monotone Verlauf des Außendurchmessers kann so gewählt werden, dass eine beabsichtigte Zustellung auf einem zu definierenden Breitenbereich als Abweichung zur einhüllenden Ellipse erreicht wird, wodurch das Werkzeug dann in einem Schnitt mit der beabsichtigten Zustellung auf dem definierten Breitenbereich Material abträgt. In der Praxis wird dies eher auf der Flanke definiert, wodurch die beabsichtigte Zustellung über den Profilwinkel aus einem abzutragenden Flankenaufmaß errechnet wird, sodass dann auf dem definierten Breitenbereich das abzutragende Aufmaß weggenommen wird. So kann über die Wahl des Außendurchmesserverlaufs der Breitenbereich am Werkzeug, der Material abträgt, gewählt werden - durch stärkere Abweichung von der Ellipse ein kleinerer Bereich - und dies kann insbesondere auf unterschiedlichen Breitenpositionen des Werkzeugs unterschiedlich gewählt werden.

Typischerweise wird außerdem nicht die komplette Verzahnung feinbearbeitet, sondern nur die Nutzflanken oder der evolventische Teil innerhalb der Formkreise, sodass in der Weichbearbeitung durch ein Werkzeug mit Protuberanz ein Freischnitt eingetragen wird, sodass ein Fertigungsaufmaß auf der Flanke stehen bleibt. Zur Auslegung des Werkzeugs wird dann eine um ein Kopf- und Fußspiel korrigierte Verzahnung anstatt der Soll-Endgeometrie verwendet.

Die im Rahmen des erfindungsgemäßen Verfahrens genutzten Achskreuzwinkel können beispielsweise in einem Bereich zwischen 0 Grad und ± Schrägungswinkel des Werkstücks und/oder in einem Bereich zwischen 0 Grad und ± 30 ° liegen, insbesondere einem Bereich zwischen 0 Grad und ± 25°.

Der Neigungswinkel wird im Rahmen der vorliegenden Erfindung verändert, um neue Berührpfade in Eingriff mit dem Werkstück zu bringen. Hierbei kann der Neigungswinkel in einem Winkelbereich variiert werden, welcher sich üblicherweise von maximal -30° bis maximal + 30° erstreckt, typischerweise jedoch von maximal -15° bis maximal + 15°.

Bevorzugt beträgt die Änderung des Neigungswinkels des Werkzeugs im Rahmen des erfindungsgemäßen Verfahrens insgesamt mehr als 1°, bevorzugt mehr als 4°, in möglichen Anwendungen auch mehr als 10° oder mehr als 20°. Die Änderung des Neigungswinkels erfolgt hierbei üblicherweise in einer Mehrzahl von Schritten, mit welchen jeweils der Berührpfad verlagert wird, um mit dem neuen Berührpfad ein oder mehrere Werkstücke zu bearbeiten.

Der Achskreuzwinkel wird hierbei dem Neigungswinkel nachgeführt, um die Eingriffsverhältnisse im wesentlichen gleich zu halten bzw. den effektiven Achskreuzwinkel auf einen gewünschten Wert einzustellen.

Die Veränderung des Achskreuzwinkels entspricht hierbei größenordnungsmäßig dem des Neigungswinkels.

Der effektive Achskreuzwinkel kann dagegen für die gesamte Bearbeitung gleich bleiben. Allerdings führt dies im Hinblick auf die Auslegung des Werkzeugs dazu, dass bei einem eigentlich gerade verzahntem Werkzeug die Position des Zahnflanken sich über die Werkzeugbreite geringfügig ändert.

In einer möglichen Ausgestaltung der vorliegenden Erfindung kann daher auch der effektive Achskreuzwinkel über die Werkzeugbreite verändert werden, um diesen Effekt auszugleichen. In einer möglichen Ausgestaltung beträgt die Änderung des effektiven Achskreuzwinkels jedoch weniger +/- 1 Grad.

Die Nachführung des Achskreuzwinkels über die Werkzeugbreite erfolgt daher zum einen zur Anpassung an den geänderten Neigungswinkel und ggf. zur Einstellung des geänderten effektiven Achskreuzwinkels.

Die Verlagerung des Berührpfads (24, 24') kann sowohl zwischen einzelnen Schnitten oder auch während eines Schnittes erfolgen. Ein Schnitt ist das axiale Durchfahren der Verzahnung des Werkstücks (20) mit dem Werkzeug (30).

Durch unterschiedlich stark ballig modifizierte Werkzeuge (20 / 20') kann, wie in Fig. 3 dargestellt, die Kontaktfläche (23 / 23') zwischen Werkzeug (20/20') und Werkstück (30) vergrößert oder verkleinert werden. Hierdurch kann man den Materialabtrag über eine entsprechende Fläche verteilen. Insbesondere weist hierbei das rechts dargestellte Werkzeug eine größere Balligkeit auf als das links dargestellte Werkzeug, so dass sich bei gleicher Zustellung zum Werkstück bzw. gleichem Materialabtrag eine kleinere Kontaktfläche 23' ergibt.

Hierbei kann die Balligkeit und der Materialabtrag, welcher durch einen Bearbeitungsschnitt vorgenommen wird, so eingestellt werden, dass die Breite der Kontaktfläche 23, 23' größer als 5 %, bevorzugt größer als 10% der Gesamtbreite des Werkzeugs ist. Auch deutlich höhere Breiten sind denkbar. So kann die Breite der Kontaktfläche größer als 20 %, 30 %, 40 % oder 50 % der Gesamtbreite des Werkzeugs sein. Bevorzugt ist die Breite geringer als 70 % der Gesamtbreite des Werkzeugs. Jener Bereich, der nicht durch die Kontaktfläche eingenommen wird, kann dann erfindungsgemäß zum Verschieben des Berührpfads 24, 24' eingesetzt werden. Dieser Berührpfad 24, 24' stellt die in Vorschubrichtung hintere Begrenzungslinie der Kontaktfläche dar.

Durch Verkippung des Werkzeugs (20, 20') kann auch die Berührfläche (23 / 23') und damit der Berührpfad (24 / 24') verlagert werden.

Wie bereits oben beschrieben stellt der Berührpfad (24 / 24' ) die obere Begrenzung der Berührfläche (23/ 23') dar, sofern das Werkzeug (20/20') von oben nach unten durch das Werkstück bewegt wird und nicht umgekehrt. Dies erlaubt im Idealfall eine Bearbeitung mit einem einzigen Schnitt, in dem durch die Fläche (23/23') der Hauptmaterialabtrag (Schruppen) erfolgt und der Berührpfad (24/24') die Endgeometrie des Werkstücks erzeugt (Schlichten).

In diesem Fall kann der Berührpfad in einen bisher unbenutzten Bereich verschoben werden, sobald der aktuell genutzte Bereich verschlissen ist.

Es ergeben sich jedoch auch eine Vielzahl von anderen Shiftstrategien, d.h. Strategien, wie diese Verschiebung des Berührpfads genutzt wird, um die Werkzeugbreite optimal auszunutzen. Insbesondere kann die Bearbeitung hierbei auch in mindestens zwei separaten Schnitten erfolgen, d.h. mindestens einem Schrupp-Schnitt und einem Schlicht-Schnitt.

Insbesondere sind folgende Varianten denkbar:
- Schruppen / Schlichten im Neubereich. Darauffolgend Shiften, sodass der bisherige Schlichtbereich in den Schruppbereich rutscht.
- Schruppen / Schlichten in getrennten Bereichen mit Shiften zwischen den Schnitten (bei Bedarf in jeweils neuen Bereich schwenken)
- Segmentshiften

Neben unterschiedlichen Shiftstrategien ist es ebenfalls denkbar, verschiedene Schleifmaterialien und insbesondere Beläge für einen Schrupp- und einen Schlichtbereich einzusetzen, unterschiedliche Ausführungsformen des Werkzeugs (konditioniert / nicht konditioniert) einzusetzen und/oder das Schruppen erfindungsgemäß durch axiales Verfahren durch das Werkstück und das Schlichten radial durch Honen durchzuführen.

Für diese Strategie der Bearbeitung kann insbesondere ein Werkzeug mit unterschiedlich beschichteten Bereichen verwendet werden, wie dies in Fig. 4 gezeigt ist, sodass beispielsweise der in Vorschub-Richtung vordere Bereich 25 mit gröberer Körnung belegt wird und zum Schruppen verwendet wird, während der in Vorschubrichtung hintere Teil 6 mit feinem Korn belegt wird.

So kann in einem mittleren Bereich 50 in einem einzigen Schnitt mit feinem Korn geschlichtet und grobem Korn geschruppt werden, oder aber jeder Bereich für sich durch Verkippung wie oben beschrieben auf unterschiedlichen Berührpfaden angefahren werden und so gleichmäßig verschlissen werden. Diese Teilung kann in einem produziert werden oder das Werkzeug als Tandem-Werkzeug zusammengesetzt sein.

Erfindungsgemäß kann das Werkzeug auch homogen beschichtet verwendet werden, um dann entweder mit unterschiedlichen Werkzeugen zu Schruppen und zu Schlichten, oder durch eine angepasste Schnittstrategie erst eine grobe Bearbeitung und dann noch ein Finishing der Oberfläche durch geringere Zustellung, verlangsamten Vorschub oder eine der groben Bearbeitung gegensinnige Bearbeitung durchzuführen.

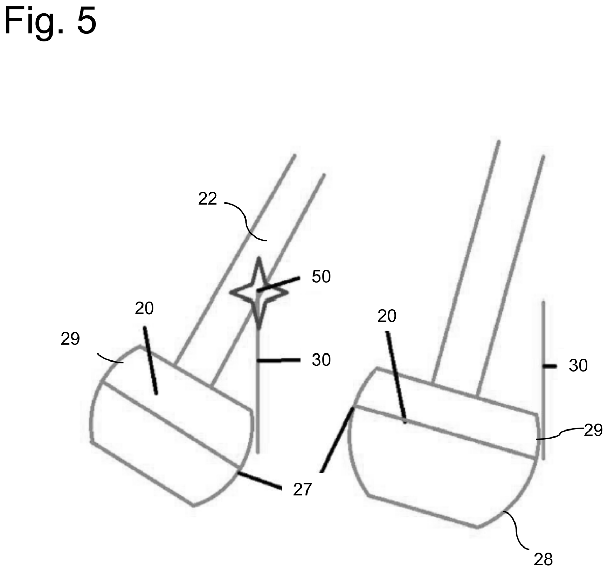

Da immer der Bereich in Bearbeitungsrichtung vor dem Berührpfad 24 Material abträgt, aber nicht zur Endgeometrie beiträgt, ergibt sich eine am weitesten in Vorschubrichtung vorne liegende Berührspur, unterhalb welcher die Berührpfade auf der entsprechenden Werkzeugbreite nie angefahren werden können. Am hinteren Ende kann jedoch theoretisch bis ans Ende des Werkzeugs geshiftet werden, sodass hier bei symmetrischer Ausführung des Werkzeugs steilere Neigungswinkel entstehen, wie dies in Fig. 5 links dargestellt ist. Dies ist in der vom Schälen übernommenen, üblichen Bearbeitungsrichtung die Seite, auf der sich der Werkzeugdorn 22 für das Werkzeug erstreckt und auf welcher das Werkzeug im Werkzeughalter eingespannt ist, was wie in Fig. 5 links dargestellt aus Kollisionsgründen 50 ungünstig ist.

Diese Problematik kann auf zwei Arten angegangen werden:
1. Die Tonnenform bzw. Breitenballigkeit am Werkzeug wird über die Werkzeugbreite asymmetrisch aufgebracht, wie dies in Fig. 5 rechts dargestellt ist, sodass der Hochpunkt 27 auf der Verzahnung gegenüber der Mitte in Vorschubrichtung nach hinten und/oder näher zur Werkzeugaufnahme am Werkzeug sitzt, um so die Neigungswinkel für die anfahrbaren Positionen weg vom Werkstück zu legen. Hierdurch hat der Bereich 28, in welchem sich der Radius ausgehend vom Hochpunkt 27 in Vorschubrichtung und/oder weg von der Werkzeugaufnahme verringert, eine größere Breite als der Bereich 29, in welchem sich der Radius des Werkzeugs ausgehend vom Hochpunkt 27 entgegen der Vorschubrichtung und/oder auf die Werkzeugaufnahme zu verringert. Dies kann so erfolgen, dass die Neigungswinkel für die anfahrbaren Positionen symmetrisch sind, oder noch weiter wie in Fig 5 rechts dargestellt. Dies kann hauptsächlich aus Kollisionsgründen Sinn machen, kann aber auch für andere Zielsetzungen verwendet werden.
2. Der Prozess wird ziehend geführt werden, wodurch der zur Werkzeugaufnahme gerichtete Bereich 29 der nicht für Endkontur anfahrbare Bereich wird, wodurch die ungünstigen Neigungswinkel wegfallen. Auch hier kann zusätzlich in gleichem Stil wie unter Punkt 1 das Werkzeug über die Breite asymmetrisch ausgeführt werden. Die ziehende Bearbeitung reduziert bei über die Breite symmetrischer Modifikation insbesondere den Überlaufweg, da der höchste anzufahrende Berührpfad am Werkzeug so weiter weg von dem zur Werkzeugaufnahme zeigenden Ende des Werkzeugs sitzt. Dies kann unter anderem verwendet werden, um die Aufspannbreite zu reduzieren oder bei überlaufkritischen Verzahnungen in der Werkzeugauslegung eine weitere Möglichkeit zu haben, den Überlauf zu reduzieren. Diese Möglichkeit besteht hierbei neben den vom Schälen bekannten Optionen: Reduzierung Neigungswinkel, Reduzierung Außendurchmesser, welche beide Nachteile mit sich bringen, während bei der ziehenden Bearbeitung erstmal keine Nachteile anfallen. Bei der ziehendenden Bearbeitung erfolgt der Vorschub des Werkzeugs durch das Werkstück so, dass die Werkzeugaufnahme in Vorschubrichtung vor dem Werkzeug angeordnet ist, bei einer drückenden Bearbeitung dagegen hinter dem Werkzeug.

Das erfindungsgemäße Verfahren kann insbesondere für die Verzahnbearbeitung von Innenverzahnungen eingesetzt werden und ermöglicht es, im Vergleich zu bekannten Verfahren das Werkzeug erheblich besser auszunutzen und hierdurch die Kosten zu senken.

Das erfindungsgemäße Verfahren kann in exakt der gleichen Weise auch für Außenverzahnungen eingesetzt werden. Hier stehen zwar in vielen Fällen bereits andere, effektive Verfahren zur Verfügung. Das erfindungsgemäße Verfahren kann jedoch insbesondere dann von Vorteil sein, wenn aufgrund eines begrenzten Überlaufs oder kollisionskritischen Verzahnungen Verfahren wie beispielsweise das Wälzschleifen nicht zum Einsatz kommen können. Das erfindungsgemäße Verfahren hat hierbei im wesentlichen die gleichen Anwendungsbereiche wie das Wälzschälen mit einem Werkzeug mit bestimmter Schneide.

Das erfindungsgemäße Verfahren kann zur kompletten Hartfeinbearbeitung der Werkstücke auf einer Maschine eingesetzt werden. Ebenfalls denkbar ist es, das Verfahren zum Super-Finishing oder zum Polieren einzusetzen. Die Werkzeugausführung ist in diesem Fall vom Material her wie bei einem Finishingwerkzeug bzw. Polierwerkzeug. Insbesondere kann hierbei das Werkzeug aus einem flexiblen Material bestehen oder mit einem solchen beschichtet sein.

## Patentansprüche

1. Verfahren zur Verzahnbearbeitung, insbesondere zur Hartfeinbearbeitung, eines oder mehrerer Werkstücke mittels eines verzahnten Feinbearbeitungswerkzeuges mit unbestimmter Schneide, welches eine tonnenförmige Grundform aufweist,
wobei das Feinbearbeitungswerkzeug und das Werkstück wälzgekoppelt miteinander rotieren, während das Feinbearbeitungswerkzeug in mindestens einem Verzahn-Schnitt in einer Vorschub-Richtung parallel zur Rotationsachse des Werkstücks verfahren wird, um das Werkstück über die Werkstückbreite zu bearbeiten,
**dadurch gekennzeichnet,**
**dass** zwischen der Bearbeitung zweier Werkstücke und/oder zwischen zwei Verzahn-Schnitten an einem Werkstück und/oder während eines Verzahn-Schnitts der Berührpfad zwischen Feinbearbeitungswerkzeug und Werkstück auf dem Feinbearbeitungswerkzeug gezielt verlagert wird, um einen anderen Bereich der Werkzeugoberfläche zum Einsatz zu bringen, indem der Neigungswinkel zwischen dem Feinbearbeitungswerkzeug und dem Werkstück verändert wird.

2. Verfahren nach Anspruch 1, wobei die Relativbewegung von Werkstück und Feinbearbeitungswerkzeug mit der Kinematik einer Wälzschälbearbeitung erfolgt und/oder wobei es sich bei dem Feinbearbeitungswerkzeug um ein Wälzschäl-Werkzeug mit unbestimmter Schneide handelt, und/oder wobei es sich bei dem Feinbearbeitungswerkzeug um ein nicht-abrichtbares Werkzeug, insbesondere ein bevorzugt galvanisch beschichtetes CBN-Werkzeug handelt, oder wobei der Berührpfad zwischen Feinbearbeitungswerkzeug und Werkstück auf dem Feinbearbeitungswerkzeug verlagert wird, ohne das Feinbearbeitungswerkzeug zwischenzeitlich abzurichten.

3. Verfahren nach Anspruch 1 oder 2, wobei der Berührpfad zwischen Feinbearbeitungswerkzeug und Werkstück auf dem Feinbearbeitungswerkzeug nach einer vorgegebenen Anzahl von Verzahn-Schnitten und/oder einer vorgegebenen Shift-Strategie verlagert wird und/oder wobei die Veränderung des Neigungswinkels ohne eine oder unabhängig von einer Vermessung einer tatsächlich gefertigten Geometrie des Werkstücks erfolgt.

4. Verfahren nach einem der vorangegangenen Ansprüche, wobei der Berührpfad mehrmals durch eine Veränderung des Neigungswinkels in einen anderen Bereich der Werkzeugoberfläche verlagert wird, wobei die Verlagerung bevorzugt jeweils so erfolgt, dass die Werkzeugoberfläche in dem anderen Bereich noch nicht oder weniger verschlissen ist als in dem Bereich, in welchem der Berührpfad vor der Verlagerung verlief, und/oder wobei der Berührpfad in einem oder mehreren Schritten um insgesamt mindestens 10 % der Werkzeugbreite verlagert wird, bevorzugt um insgesamt mindestens 20 % der Werkzeugbreite.

5. Verfahren nach einem der vorangegangenen Ansprüche, wobei der Materialabtrag auf dem Werkstück in einem Bearbeitungs-Schnitt innerhalb eines Kontaktbereiches mit dem Feinbearbeitungswerkzeug erfolgt, welcher auf dem Feinbearbeitungswerkzeug eine Erstreckung in Vorschub-Richtung aufweist, wobei der Berührpfad durch das in Vorschub-Richtung hinten liegende Ende des Kontaktbereiches gebildet wird.

6. Verfahren nach einem der vorangegangenen Ansprüche, wobei die Tonnenform des Feinbearbeitungswerkzeugs und/oder die Form der Zähne und die Zustellung zum Werkstück so gewählt werden, dass die Breite eines Kontaktbereichs zwischen dem Werkstück und dem Feinbearbeitungswerkzeug, in welchem in einem Bearbeitungs-Schnitt ein Materialabtrag auf dem Werkstück erfolgt, mindestens 10 % der Werkzeugbreite beträgt, bevorzugt mindestens 20 % der Werkzeugbreite.

7. Verfahren nach einem der vorangegangenen Ansprüche, wobei das Feinbearbeitungswerkzeug auf einem Werkzeugdorn aufgespannt ist, welcher einseitig in einer Werkzeugaufnahme aufgenommen ist, wobei die Vorschub-Bewegung des Bearbeitungs-Schnitts bevorzugt ziehend erfolgt.

8. Verfahren nach einem der vorangegangenen Ansprüche, wobei das Feinbearbeitungswerkzeug zwei Breiten-Bereiche mit unterschiedlichem Schleifmaterial, insbesondere mit unterschiedlicher Beschichtung, aufweist.

9. Verfahren nach Anspruch 8, wobei durch Verkippen des Feinbearbeitungswerkzeuges zwischen einer Schrupp- und einer Schlicht-Bearbeitung ein erster Breiten-Bereich zum Schruppen und ein zweiter Breiten-Bereich zum Schlichten eingesetzt wird und/oder wobei der Kontaktbereich beim Schleifen so gewählt wird, dass ein in Vorschub-Richtung vorderer Teil des Kontaktbereiches in einem ersten Breiten-Bereich mit einer ersten Körnung und der Berührpfad in einem zweiten Breiten-Bereich mit einer zweiten Körnung liegt, wobei die erste Körnung gröber ist als die zweite Körnung.

10. Verfahren nach einem der vorangegangenen Ansprüche, wobei ein Punkt des Feinbearbeitungswerkzeuges mit dem größten Radius gegenüber der Mitte der Werkzeugbreite versetzt angeordnet ist und das Werkzeug in einen ersten und einen zweiten Bereich mit ausgehend von diesem Punkt kleiner werdenden Radius aufteilt, welche eine unterschiedliche Breite aufweisen, wobei der Unterschied bevorzugt mindestens 5 % des betragsmäßig kleineren Werts beträgt und/oder wobei bevorzugt der erste, in Vorschubrichtung vorne angeordnete und/oder dem Werkzeughalter abgewandte Bereich eine größere Breite aufweist als der zweite, in Vorschubrichtung hinten angeordnete und/oder dem Werkzeughalter zugewandte Bereich,
wobei bevorzugt beim Bearbeiten eines Werkstücks mit einem ersten Kontaktbereich, welcher benachbart zu einem in Vorschubrichtung vorne liegenden und/oder dem Werkzeughalter abgewandten Ende des Feinbearbeitungswerkzeugs liegt, mit einem betragsmäßig größeren Neigungswinkel gearbeitet wird als beim Bearbeiten eines Werkstücks mit einem zweiten Kontaktbereich, welcher benachbart zu einem in Vorschubrichtung hinten liegenden und/oder dem Werkzeughalter zugewandten Ende des Feinbearbeitungswerkzeugs liegt, wobei der Unterschied bevorzugt mindestens 5 % des betragsmäßig kleineren Werts beträgt.

11. Verfahren nach einem der vorangegangenen Ansprüche, wobei eine Verzahnbearbeitung, bei welcher das Feinbearbeitungswerkzeug in mindestens einem Verzahn-Schnitt in einer Vorschub-Richtung parallel zur Rotationsachse des Werkstücks verfahren wird, für eine Schrupp-Bearbeitung eingesetzt wird, während die Schlichtbearbeitung durch Honen erfolgt, wobei die erste Verzahnbearbeitung und das Honen bevorzugt mit der gleichen Aufspannung des Werkstücks und/oder des Feinbearbeitungswerkzeugs erfolgen,
wobei weiter bevorzugt ein erster Bereich und/oder Teil des Feinbearbeitungswerkzeugs für die erste Verzahnbearbeitung und ein zweiter Bereich und/oder Teil des Feinbearbeitungswerkzeugs für das Honen eingesetzt wird, wobei bevorzugt die Breitenballigkeit des zum Honen eingesetzten zweiten Bereichs und/oder Teils kleiner ist als die Breitenballigkeit des ersten Bereichs und/oder Teils.

12. Verfahren nach einem der vorangegangenen Ansprüche, wobei eine Mehrzahl von identischen Werkstücken verzahnbearbeitet werden und/oder eine Mehrzahl von Werkstücken durch die Verzahnbearbeitung mit einer identischen Geometrie versehen werden, wobei der Berührpfad bevorzugt mehrfach verlagert wird.

13. Feinbearbeitungswerkzeug für ein Verfahren nach einem der vorangegangenen Ansprüche, insbesondere Feinbearbeitungswerkzeug mit einem ersten und zweiten Breiten-Bereich, Bereich und/oder Teil mit einem unterschiedlichen Schleifmaterial und/oder einer unterschiedlichen Breite und/oder einer unterschiedlichen Breitenballigkeit, und/oder Feinbearbeitungswerkzeug, bei welchem es sich um ein Wälzschäl-Werkzeug mit unbestimmter Schneide handelt und/oder dessen Profil für jeden Zahn in jeder Breitenposition in einer Schnittebene durch einen Punkt am Außendurchmesser die Form einer Schneide eines Wälzschälwerkzeugs aufweist, wobei das Profil bevorzugt so ausgelegt ist, dass das das Profil definierende Wälzschälwerkzeug auf den entsprechenden Außendurchmesser ausgelegt und unter dem gewählten effektiven Achskreuzwinkel positioniert sowie um einen Neigungswinkel δ gekippt einsetzbar ist, welcher gerade der Ableitung des Außendurchmesserverlaufs an der entsprechenden Breitenposition entspricht.

14. Verzahnmaschine mit einer um eine erste Rotationsachse drehbar angetriebenen Werkstückaufnahme und einer um eine zweite Rotationsachse drehbar angetriebenen Werkzeugaufnahme, wobei die Werkzeugaufnahme und die Werkstückaufnahme relativ zueinander über Bewegungsachsen der Verzahnmaschine bewegbar sind, und mit einer Steuerung, welche programmiert ist, die Bewegungsachsen der Verzahnmaschine so anzusteuern, dass die Verzahnmaschine ein Verfahren nach einem der vorangegangenen Ansprüche durchführt.

15. Computerprogramm mit Befehlen, welche, wenn Sie auf der Steuerung einer Verzahnmaschine gemäß Anspruch 14 ablaufen, die Bewegungsachsen der Verzahnmaschine so ansteuern, dass die Verzahnmaschine ein erfindungsgemäßes Verfahren gemäß einem der vorangegangenen Ansprüche durchführt.
